(19) Europäisches Patentamt
European Patent Office
Office européen des brevets

(11) **EP 0 577 631 B1**

(12) **EUROPÄISCHE PATENTSCHRIFT**

(45) Veröffentlichungstag und Bekanntmachung des Hinweises auf die Patenterteilung:
**29.05.1996 Patentblatt 1996/22**

(51) Int Cl.[6]: **H04N 1/41**

(21) Anmeldenummer: **92906343.6**

(86) Internationale Anmeldenummer:
**PCT/DE92/00199**

(22) Anmeldetag: **10.03.1992**

(87) Internationale Veröffentlichungsnummer:
**WO 92/17981 (15.10.1992 Gazette 1992/26)**

(54) **VERFAHREN ZUR KOMPRESSION VON BILDDATEN**

PROCESS FOR COMPRESSING VIDEO IMAGES

PROCEDE DE COMPRESSION DE DONNEES VIDEO

(84) Benannte Vertragsstaaten:
**AT CH DE FR GB IT LI NL**

(30) Priorität: **28.03.1991 DE 4110400**

(43) Veröffentlichungstag der Anmeldung:
**12.01.1994 Patentblatt 1994/02**

(73) Patentinhaber: **SIEMENS AKTIENGESELLSCHAFT D-80333 München (DE)**

(72) Erfinder: **LUHN, Achim D-8038 Gröbenzell (DE)**

(56) Entgegenhaltungen:
- **BYTE Januar 1988, ST PETERBOROUGH (US) Seiten 215 - 223; M.F.BARNSLEY ET. AL.: 'A Better Way to Compress Images' (in der Anmeldung erwähnt)**

**Beschreibung**

Die Erfindung betrifft ein neuartiges Verfahren zur Reduzierung des Speicherbedarfs bei der Speicherung von Bilddaten in elektronischen Datenverarbeitungssystemen bzw. zur Reduktion der Datenübertragungsrate bei der Übertragung von Bilddaten in Telekommunikationssystemen oder anderen Datenüber-tragungseinrichtungen. Derartige Verfahren haben eine hohe und noch stark wachsende wirtschaftliche Bedeutung auch im Hinblick auf entsprechende Dienste im Zusammenhang mit der digitalen Nachrichtenübertragung in öffentlichen Kommunikationsne-tzen (ISDN), oder im Zusammenhang mit der massenhaften Speicherung von Bilddaten z.B. in der Medizintechnik und in anderen Bereichen der angewandten Forschung.

Herkömmliche Verfahren reduzieren den Speicherbedarf für die Archivierung von Standbildern und Bewegtbildsequenzen oder die Datenübertragungsrate für eine Übertragung von Stand- und Bewegtbildern durch eine Auswahl und/oder Kombination von im wesentlichen folgenden Verfahren:

- räumliche Unterabtastung
- zeitliche Unterabtastung
- Lauflängencodierung (z.B. CCITT G3)
- Huffmanncodierung
- Lempel-Ziv-Welch (LZW) Codierung
- hierarchische Codierung (Quadtrees und Varianten)
- Unterabtastung im Farbraum
- Transformationscodierung mit Quantisierung der Koffizienten
- Bewegungsschätzung bzw. - prädiktion.

Je nach Bildmaterial und Qualitätsanspruch bei der Wiedergabe lassen sich dabei Kompressionsfaktoren von i. a. nicht mehr als 20 (bei Standbildern) bis 200 (z.B. bei der Codierung von Bewegtbildsequenzen für die Übertragung über 64 kbit/s Leitungen beim Bildtelefon) erreichen.

Barnsley hat in einem Aufsatz in den Proc. of the National Acad. of Sciences USA, vol. 83, pp 1975 - 1977, 1986 die Grundlagen für ein neuartiges Verfahren beschrieben mit dem Kompressionsfaktoren bei der Bilddatenkompression zwischen 1000 bis 10000 erreicht werden können. Bei diesem Ansatz werden sog. iterierte Funktionensysteme benutzt, um ein Bild näherungsweise als Überlagerung von mehreren geometrischen Figuren mit meist fraktaler Dimension darzustellen. Bei den bisher bekannt gewordenen Beispielen für Bilder, welche auf diese Art komprimiert wurden (s. Barnsley und Sloan in der Zeitschrift Byte, Jan. 1988, S. 215 bis 223) ist die Codierung jedoch immer interaktiv von erfahrenen Operateuren erzeugt worden. Die Firma Iterated Systems, Inc., die von M.F.Barnsley zur technischen Realisierung und Vermarktung seiner Ideen gegründet wurde, beschäftigt sich intensiv mit Verfahren für die automatische Kompression von Bildern mit Hilfe dieser Methoden. Bis heute sind allerdings auf diese Weise nur enttäuschende und technisch unbrauchbare Kompressionsfaktoren in der Größenordnung von 10 erzielt worden.

Der Erfindung liegt die Aufgabe zugrunde, ein Verfahren zur Kompression von Bilddaten anzugeben, mit dessen Hilfe die automatische Kompression von Bilddaten auch ohne Mitwirkung eines menschlichen Operateurs unter Erzielung von extrem hohen Datenkompressionsfaktoren im Bereich zwischen 1000 und 10000 möglich ist. Diese Aufgabe wird mit Hilfe eines Verfahrens zur Kompression von Bilddaten mit Merkmalen nach Pnspruch 1 gelost.

Bei diesem Verfahren werden die Bilddaten durch invariante Dichten stochastischer Prozesse approximiert, wobei die Träger dieser invarianten Dichten, d.h. diejenigen Teilmencen der Bildebene auf welchen diese invariante Dichten nicht verschwindende Werte annehmen, ebenfalls von zumeist fraktaler Dimension sind. Wie auch bei dem Verfahren von Barnsley werden die Parameter derjenigen stochastischen Prozesse, deren invariante Dichten das Bild angenähert darstellen, als komprimierte Darstellung des Bildes herangezogen, oder zu einer komprimierten Darstellung dieses Bildes verwendet. Der entscheidende Unterschied zum Verfahren von Barnsley besteht aber darin, daß die stochastischen Prozesse nicht von einem erfahrenen menschlichen Operateur, sondern mit Hilfe eines automatisch ablaufenden Optimierungsverfahrens gefunden werden. Dieses Optimierungsverfahren sucht denjenigen stochastischen Prozeß, welcher eine Gütefunktion zur Bewertung der Güte der Approximation des zu komprimierenden Bildes durch die invarianten Dichten von stochastischen Prozessen optimiert. Die Werte der Parameter des auf diese Weise gefundenen stochastischen Prozesses ergeben eine komprimierte Darstellung des zu komprimierenden Bildes.

Damit ist zum ersten Mal ein Verfahren angegeben, mit welchem die Kompression von Bilddaten unter Erreichung von extremen Datenkompressionsfaktoren im Bereich von 1000 bis 10000 auf automatische Weise möglich ist. Das Verfahren eignet sich zur Kompression jeglicher Art digitaler Rasterbilder, insbesondere auch zur Kompression von digitalen Rasterbilden aus zeitlichen Folgen solcher Rasterbilder. Die zu komprimierenden Bilddaten können insbesondere auch bei der Durchführung anderer Bilddatenkompressionsverfahren entstanden sein, wie z.B. Bilddaten im Transformationsbereich eines Transformationscodierungsverfahrens, Differenzbilddaten beim Ablauf eines Differenzpulscodemodulationsverfahrens, räumlich oder zeitlich unterabgetastete Bilder, oder bewegungskompensierte Bilder.

Das hier vorgeschlagene Kompressionsverfahrens für Bilddaten läßt sich hierdurch mit einer Vielzahl von bekannten Kompressionsverfahren für Bilddaten kombinieren.

Das Verfahren ist insbesondere auch zur Kompression von Farbbilddaten, Binärbilddaten oder Graubilddaten geeignet. Falls die zu komprimierenden Bilddaten Farbbilddaten sind, muß das Verfahren auf jede Farbkomponente getrennt angewendet werden. Binärbilder können als Spezialfälle von Grauwertbildern angesehen werden, deren Grauwerte lediglich zwei (extreme) Werte, nämlich "schwarz" bzw; "weiß" annehmen können.

Es hat sich als besonders vorteilhaft herausgestellt, zur Kompression von Bilddaten eine besondere Klasse von stochastischen Prozessen heranzuziehen, welche durch zufallsgesteuerte Hintereinanderausführung von affinen Transformationen der Bildebene entstehen. Jeder stochastische Prozeß aus dieser Familie ist durch die Angabe der Transformationsparameter der verwendeten affinen Transformationen sowie durch die Angabe der relativen Häufigkeiten, mit denen diese affinen Transformationen ausgeführt werden, eindeutig charakterisiert. Ein bestimmter stochastischer Prozeß dieser Familie, dessen invariante Dichte ein gegebenes Bild im Sinne eines Gütekriteriums tesonders gut approximiert, kann zur Kompression dieses Bildes verwendet werden, indem die diesen stochastischen Prozeß charakterisierenden Parameter, d.h. sämtliche Transformationsparameter seiner affinen Transformation und sämtliche relativen Häufigkeiten, zur komprimierten Darstellung dieses Bildes verwendet werden. Als Gütekriterium bei der Auswahl eines solchen Prozesses wird vorzugsweise eine geeignet gewählte Metrik, d.h. ein Abstandsmaß, auf dem Raum der Dichten bzw. Bilder verwendet.

Es hat sich als besonders vorteilhaft erwiesen, zur Auswahl dieses stochastischen Prozesses ein stochastisches Optimierungsverfahren zu verwenden. Hierzu sind besonders sog. genetische Algorithmen geeignet, bei denen eine Population von stochastischen Prozessen, deren Parameter ihren Genotyp bilden und deren zugehörige invariante Dichten ihren Phänotyp bilden, in einem darwinistischen Wettbewerb stehen.

Da das Verfahren zur Kompression von Bilddaten mit einem nicht unerheblichen Rechenaufwand verbunden ist, ist es im allgemeinen vorteilhaft, wenn das zu komprimierende Bild in verschiedenen Auflösungsebenen einer Auflösungspyramide vorliegt, und wenn die Auflösung mit dem Fortschreiten des Optimierungsverfahrens, welches den zur Kompression verwendeten stochastischen Prozeß auswählt, schrittweise gesteigert wird.

Vorteilhafte Weiterbildungen der Erfindung ergeben sich aus den abhängigen Patentansprüchen.

Im folgenden wird die Erfindung anhand eines bevorzugten Ausführungsbeispiels beschrieben.

Der Erfindung liegen als Grundlagen zwei ganz verschiedenartige neuere mathematische Methoden zugrunde: Zum einen die Theorie der iterierten Funktionensysteme, zum anderen die Theorie der genetischen Algorithmen. Da beide Methoden dem Durchschnittsfachmann auf dem Gebiet der Bilddatenkompression nicht unbedingt geläufig sind, zur Darstellung des erfindungsgemäßen Verfahrens aber unentbehrlich sind, werden in zwei einleitenden Abschnitten diese beiden grundlegenden mathematischen Methoden, soweit sie für das Verständnis des Erfahrens erforderlich sind, beschrieben. Grundsätzlich können aber alle hier benötigten Methoden und Begriffe auch den Veröffentlichungen von Barnsley 1986 bzw. dem Buch von Goldberg: "Genetic Algorithms in Search, Optimization, and Machine Learning, " Addison Wesley, Reading, MA, USP.1990 entnommen werden.

Iterierte Funktionensysteme.

Ein iteriertes Funktionensystem IFS besteht aus einer Menge W von affinen Abbildungen oder Transformationen w(i), wobei i = 1, ..., n sowie aus einer gleich großen Menge P von relativen Häufigkeiten (oder auch Wahrscheinlichkeiten) p (i), wobei i = 1, ... n:

$$
\begin{aligned}
W &= \{w(1), \ldots, w(n)\} \\
P &= \{p(1), \ldots, p(n)\} \quad mit\ p(i) \geqslant 0 \\
und\ &p(1) + p(2) + \ldots + p(n) = 1
\end{aligned} \tag{1}
$$

Eine affine Abbildung w(i) ist eine lineare Transformation der Bildebene in sich, welche jeden Punkt x der Bildebene in den Punkt w(i,x) der Bildebene nach Formel 2) überführt:

$$
w(i,x) = A(i) \cdot x + B(i) \quad mit
$$

$$
A(i) = \begin{pmatrix} a(i) & b(i) \\ c(i) & d(i) \end{pmatrix}, \ B(i) = \begin{pmatrix} e(i) \\ f(i) \end{pmatrix} \tag{2}
$$

dabei ist A(i) eine zu w(i) gehörige 2 x 2 Transformationsmatrix und B(i) ein zu w(i) gehöriger Translationsvektor.

Die Menge der affinen Transformationen bildet eine Gruppe im algebraischen Sinne. Führt man affine Transformationen hintereinander aus, erhält man als Ergebnis wiederum eine affine Transformation. Führt man affine Transformtionen w(i) in zufälliger Reihenfolge jeweils mit Wahrscheinlichkeiten p(i) hintereinander aus, so erhält man einen stochastischen Prozeß, dessen Eigenschaften sowohl von den Parametern A(i), B(i) der affinen Transformationen als auch von den Wahrscheinlichkeiten bzw. relativen Häufigkeiten p(i) abhängen, mit denen diese Transformationen ausgewählt werden. Unter der in Formel (3)

$$ |A(1)|^{P(1)} \cdot |A(2)|^{P(2)} \cdot \ldots \cdot |A(n)|^{P(n)} < 1 \tag{3} $$

dargestellten Bedingung, in der das Produkt der mit den relativen Häufigkeiten p(i) potenzierten Determinanten der Transformationsmatrizen A(i) echt kleiner als 1 sein muß, besitzt ein stochastischer Prozeß vom hier dargestellten Typ eine invariante Dichte, d.h. es gibt eine Funktion auf der Bildebene, also ein Bild, welches von diesem stochastischen Prozeß bzw. iterierten Funktionensystem in sich selbst überführt wird.

Den Träger dieser invarianten Dichte, d.h. diejenige Teilmenge der Bildebene, auf welcher diese Dichte von Null verschieden ist, kann man durch folgendes einfaches Experiment erzeugen:

Dazu wählt man als Startpunkt x(0) den Fixpunkt einer der Abbildungen w(i), also einen Punkt, welcher von der Abbildung w(i) auf sich selbst abgebildet wird. Auf diesen Startpunkt x(0) verwendet man nacheinander die Abbildungen w(j) mit den relativen Häufigkeiten p(j) an und erhält so eine Menge von Punkten in der Bildebene, welche den Träger der invarianten Dichte des zu diesem Parameter gehörigen stochastischen Prozesses bzw. iterierten Funktionensystems umso besser überdeckt, je länger man diesen Iterationsprozeß wiederholt. Der Träger der invarianten Dichte des stochastischen Prozesses wird dabei als Bild erzeugt. Diesen Träger bezeichnet man auch als Attraktor des iterierten Funktionensystems. Die in Formel (3) beschriebene Bedingung bezeichnet man als Kontraktivitätsbedingung. Jeder Punkt des Attraktors wird dabei mit einer relativen Häufigkeit von dem stochastischen Prozeß belegt, die dem Wert der invarianten Dichte dieses stochastischen Prozesses in diesem Punkt entspricht. Der gesamte Attraktor ist invariant unter dem stochastischen Prozeß, welcher den Parametern die durch die Mengen W bzw. P gegeben sind, entspricht.

Da die Attraktoren solcher stochastischen Prozesse bzw. iterierter Funktionensysteme gewöhnlich eine fraktale Dimension besitzen, bezeichnet man ihre Abbilder gewöhnlich auch als Fraktale.

Genetische Algorithmen

In jüngerer Zeit werden zunehmend sog. genetische Algorithmen eingesetzt, um schwierige Optimierungsaufgaben, besonders nichtkonvexe Optimierungsaufgaben, zu lösen. Eine einführende Darstellung in das Gebiet der genetischen Algorithmen findet sich z.B. in dem Buch von Goldberg: "Genetic Algorithms in Search, Optimization, and Machine Learning", Addison-Wesley, Reading, MA, USA 1990. Bei diesen Verfahren werden bestimmte Prinzipien, die in der natürlichen Evolution nach Charles Darwin zur Evolution der Arten führten, aufgegriffen, um technische Systeme oder Verfahren zu optimieren. Die wichtigsten Prinzipien der Evolution werden im folgenden unter Verwendung der biologischen Nomenklatur erläutert, soweit dies zum Verständnis der genetischen Algorithmen, wie sie zur Durchführung des erfindungsgemäßen Verfahrens eingesetzt werden, notwendig sind:

1) Jedes Individuum ist durch einen Genotyp und einen Phänotyp gekennzeichnet. Der Genotyp ist durch die Summe der Ertanlagen gegeben, der Phänotyp durch die Gestalt und das verhalten des Individuums. Der Phänotyp ist dabei fast ausschließlich durch den Genotyp determiniert.

2) Bei der Reproduktion von Individuen wird der Genotyp weitergegeben. Der Genotyp der Nachkommen wird durch einige nur dem Zufall unterworfene und insbesondere nicht vom Phänotyp abhängige Prozesse modifiziert:

    a) Mutation durch fehlerhaftes Kopieren der Gene oder extern getriggerte Vorgänge;
    b) Überkreuzung von Genen (Genetic Crossover);
    c) Wechselseitiger Austausch von einzelnen väterlichen und mütterlichen Genen;

3) Individuen sind durch einen bestimmten Grad der Anpassung ("Fitness") an ihre Umwelt charakterisiert. Der Grad dieser Anpassung ist dabei nur durch den Phänotyp des Individuums und die Umwelt selbst bestimmt;

4) Individuen, die einen höheren Anpassungsgrad besitzen, haben eine größere Zahl von Nachkommen als solche mit niedrigerer Fitness (differentielle Reproduktion).

Im Ergebnis führen diese Evulotionsmechanismen zu einer von Generation zu Generation wachsenden Anpassung der Mitglieder einer Population an die Umweltbedingungen, bei der die weniger angepaßten Individuen von denjenigen mit höherer Fitness verdrängt werden. Unter einem genetischen Optimierungsverfahren versteht man demnach ein stochastisches, d.h. vom Zufall gesteuertes Optimierungsverfahren, bei dem eine statistische Gesamtheit suboptimaler Lösungen des Optimierungsproblems, dargestellt durch eine Population von Individuen, gewissen Änderungen, gesteuert durch die Mechanismen der biologischen Evulotion, unterworfen wird, mit dem Ziel, eine veränderte statistische Gesamtheit von suboptimalen Lösungen zu erhalten, deren Mitglieder durch einen verbesserten Grad der Anpassung, d.h. durch bessere Werte eines Gütekriteriums charakterisiert sind.

Im foloenden wird das erfindungsgemäße Verfahren, weil es dem besseren Verständnis dient, teilweise unter Verwendung der biologischen Terminologie beschrieben. Dabei bestehen folgende Korrespondenzen zwischen Begriffen der biologischen Terminologie auf der einen Seite und der Theorie der iterierten Funktionensysteme bzw. stochastischen Prozesse auf der anderen Seite:

Genotyp -    Parameter eines iterierten Funktionensystems bzw. eines stochastischen Prozesses
Phänotyp -   Invariante Dichte eines iterierten Funktionensystems bzw. stochastischen Prozesses
Individuum - Mitglied einer statistischen Gesamtheit (Population) von stochastischen Prozessen bzw. iterierten Funktionensystemen
Fitness -    Güte der Approximation eines Bildes durch die invariante Dichte eines stochastischen Prozesses

Ablauf des Verfahrens zur Bilddatenkompression

Im folgenden wird ein möglicher Ablauf des Verfahrens zur Bilddatenkompression anhand eines bevorzugten Ausführungsbeispiels beschrieben: Zunächst wird eine Anfangspopulation von K Individuen mit einheitlichem Genotyp erzeugt. Hierfür bietet es sich an, einen Genotyp zu wählen, dessen Phänotyp einer gleichmäßigen Überdeckung der gesamten Bildebene mit N Pixeln in der Breite und M Pixeln in der Höhe zu wählen. Solche invarianten Dichten, welche innerhalb der Bildebene überall konstante Werte annehmen, werden z.B. von einem iterierten Funktionensystem erzeugt, daß durch vier affine Transformationen mit Parametern und relativen Häufigkeiten gemäß Tabelle 1 gegeben ist:

| i | $a_i$ | $b_i$ | $c_i$ | $d_i$ | $e_i$ | $f_i$ | $p_i$ |
|---|---|---|---|---|---|---|---|
| 1 | 0.00 | 0.25 | 0.00 | 0.25 | 0.00 | 0.00 | 0.25 |
| 2 | 0.00 | 0.25 | 0.00 | 0.25 | N/2 | 0.00 | 0.25 |
| 3 | 0.00 | 0.25 | 0.00 | 0.25 | 0.00 | M/2 | 0.25 |
| 4 | 0.00 | 0.25 | 0.00 | 0.25 | N/2 | M/2 | 0.25 |

Tabelle 1

Da alle Individuen dieser 1. Generation den gleichen Genotyp und folglich auch den gieichen Phänotyp haben, unterscheiden sie sich nicht in der Fitness. Die 2. Generation entsteht nun durch "Kreuzung" von Individuen der 1. Generation, wobei Mutation, Crossover und Austausch von Vater- und Mutteroenen (jeweils mit einer bestimmten Wahrscheinlichkeit des Auftretens) den Genotyp verändern.

Die Individuen der zweiten Generation werden sich also untereinander in ihren Genotypen, damit auch in ihren Phänotypen, und damit in ihrer Fitness unterscheiden. Es werden fortan bei der Nachkommenbildung diejenigen Elternteile bevorzugt, die eine im Vergleich zur restlichen Population höhere Fitness haben. Von Generation zu Generation entstehen also bevorzugt Nachkommen, deren Genotyp aus den Genotypen der angepaßtesten Individuen der Elterngeneration gebildet wurde. In die Population der nächsten Generation werden jeweils nur eine bestimmte begrenzte Anzahl der Individuen mit der besten Fitness übernommen. Auf diese Weise wird ein explosionartiges Anwachsen der Population verhindert. Dies kann z.B. durch eine strikte Begrenzung der Zahl der Individuen pro Population oeschehen. Nach einer genügend großen Anzahl von Generationen, d.h. wenn die durch die Fitness bewertete Approximationsgüte eines Bildes durch die invarianten Dichten der Mitglieder der momentanen Population einen entsprechend hohen Wert erreicht hat, wird der Genotyp des Individuums (d.h. die Parameter des iterierten Funktionensystems) mit der besten Fitness als komprimierte Darstellung des Bildes verwendet.

Die Variation des Genotyps wird mit Hilfe der Mechanismen "Mutation", "Gentausch" bzw. "genetisches Crossover" erreicht. Hierzu müssen zunächst Wahrscheinlichkeiten für das Auftreten dieser beiden Mechanismen bei der Erzeugung eines Nachkommens angegeben werden: die Mutationsrate, die Gentauschrate und die Crossoverrate. Die jeweiligen Vorgänge bewirken, falls sie eintreten, folgendes:

Mutation:    Durch Mutation werden einer oder mehrere der Parameter a(i), b(i), c(i), d(i), e(i), f(i) und - falls Grauwert- oder Farbbilder kodiert werden sollen - die relativen Häufigkeiten p(i) des iterierten Funktionensystems verändert. Dies kann z.B. durch einen Random-Walk-Prozeß oeschehen. Dabei muß auf die unveränderte Einhaltung der Randbedingung der Kontraktivität (Formel 3) geachtet werden.

Crossover: Durch Crossover kann die Anzahl n der affinen Transformationen, welche ein iteriertes Funktionensystem charakterisieren, verändert werden. Die ersten j affinen Transformationen eines Elternteils werden mit den letzten k affinen Transformationen des anderen Elternteils kombiniert. Auf diese Weise entsteht ein iteriertes Funktionensystem mit $n = k + j$ affinen Transformationen. Bei einem Crossover muß natürlich darauf geachtet werden, daß die Summe der relativen Häufigkeiten anschließend wieder auf 1 normiert wird.

Gentausch: Einer oder mehrere der Parameter $a_i$ bis $p_i$, die das Individuum von dem einen Elternteil übernommen hat, werden durch den oder die entsprechenden Parameter des anderen Elternteils ersetzt. Auch hier muß ggf. der Satz der Wahrscheinlichkeiten $p_i$ neu normiert werden.

Die Menge der Individuen einer laufenden Population kann entweder konstant gehalten werden oder entsprechend dem Fortgang der Evolution (Optimierung) variiert werden. So kann man z.B. die Zahl der Individuen einer Population erhöhen, um bei stagnierenden Fitness-Werten die Bandbreite des Genpools zu erhöhen. Andererseits ist es angebracht, die Größe einer Population zu verkleinern, falls die Entwicklung genügend rascher fortschreitet, um hierdurch den Rechenaufwand zu verringern. In jedem Falle werden nur die besten Individuen einer Population übernommen. Dabei sind für die zeitliche Entwicklung einer Population zwei Vorgehensweisen möglich:

Synchrone Evulotion: Aus der Population zur Zeit t wird unter Beachtung der differentiellen Reproduktion eine bestimmte Anzahl von Nachkommen gezüchtet. In die Population zur Zeit t + 1 wird eine entsprechende Anzahl der besten Individuen übernommen, die sowohl aus der neuen Nachkommenschaft als auch aus der alten Population (d. h. aus der älteren Generation) stammen können.

Asynchrone Evulotion: Aus der Population zur Zeit t wird unter Beachtung der differntiellen Reproduktion ein Nachkomme erzeugt. Dieser wird sofort Teil der neuen Population, wenn seine Fitness groß genug ist. Dabei werden u.U. ein oder mehrere Individuen mit der schwächsten Fitness aus der Population entfernt, um die Populationsgröße an den erwünschten Wert anzupassen.

Die technische Tauglichkeit des beschriebenen Optimierungsverfahrens zur Bilddatenkompression hängt entscheidend von der Wahl einer geeigneten Fitness-Funktion ab. Diese bewertet die Güte der Approximation eines Bildes durch die invariante Dichte eines iterierten Funktionensystems oder eines allgemeineren stochastischen Prozesses. Dabei muß die Fitness-Funktion, also das Gütekriterium, wie jede Kostenfunktion den üblichen Stetigkeits- und Monotoniebedingungen genügen. In Anlehnung an übliche Vorgehensweisen bietet sich z.B. die über alle Bildpunkte der Bildebene erstreckte Summe aller Quadrate von Differenzen zwischen den Grauwerten des zu komprimierenden Bildes und den Werten der invarianten Dichte an. Das Verfahren läßt sich aber u.U. verbessern, falls man dabei quadrierte Differenzen in denjenigen Bildbereichen, welche visuell kritisch sind, z.B. (im Zentrum des Eildes oder in Bereichen mit hohem Kontrast) mit höheren Gewichtsfaktoren multipliziert.

Die Kompression eines Bildes kann zusätzlich durch die Verwendung von Auflösungspyramiden unterstützt werden: Dabei wird das zu komprimierende Bild in verschiedenen Auflösungsebenen einer Auflösungspyramide dem Optimierungsverfahren zur Suche des besten iterierten Funktionensystems zugeführt: Die Fitness für die ersten Generationen der Evulotion wird dabei zunächst mit Hilfe einer groben Bildauflösung getestet (z.B. mit der dritten Stufe einer Quadtree-Darstellung, oder z.B. mit Hilfe eines um einen entsprechenden Faktor unterabgetasteten Bildes. Bei den folgenden Generationen kann die Auflösung zu geeigneten Zeitpunkten, z.B. wenn die Fitnesswerte nur noch langsam veränderlich sind, schrittweise bis zur Auflösung des Originalbildes verbessert werden. Auf diese Weise sind erhebliche Einsparungen an Rechenzeit und damit ein schnellerer Ablauf des Verfahrens möglich.

Dekompression eines komprimierten Bildes

Die Dekompression eines mit diesem Verfahren komprimierten Bildes ist denkbar einfach: Zu diesem Zweck wird einfach die invariante Dichte des zur Kompression des Bildes verwendeten iterierten Funktionensystems bzw. stochastischen Prozesses berechnet. Dies geschieht z.B. mit Hilfe des im Abschnitt "iterierte Funktionensysteme" dargestellten Verfahrens, bei dem - ausgehend von einem Startpunkt in der Bildebene der Attraktor und damit die invariante Dichte eines iterierten Funktionensystems durch wiederholte Anwendung der zu ihm gehörenden affinen Transformationen mit den zu ihm gehörenden relativen Häufigkeiten auf die sich ergebenden Punkte der Bildebene - berechnet wird. Die bereits erwähnte Firma Iterated Systems Inc., hat Hardware entwickelt, mit der Bilder im Format 256 x 256 Bildpunkten in 1/30 Sekunde aus ihrer komprimierten Darstellung in Form der Parameter eines iterierten Funktionensystems rekonstruiert werden können. Damit ist gezeigt, daß die mit Hilfe dieses Verfahrens komprimierten Bilddaten mit einer Geschwindigkeit dekomprimiert werden können, welche die Anwendung des beschriebenen Verfahrens zur Dekompression von zeitlichen Folgen komprimierter Bilder in Echtzeit gestattet.

Sowohl die Kompression von Bilddaten als auch die Dekompressicn von Bilddaten sind leicht parallelisierbar und mit einfachem Hardware-Aufwand durchzuführen. Bei der Bilddekompression sinc beispielsweise pro Iteration eines Bildpunktes die Berechnunc einer Zufallszahl, zwei Multiplikationen und drei Additionen erforderlich. Bei der Durchführung der Kompression kann zur Berechnung der Gütefunktion auf Standard-Bildverarbeitungs-Hardware zurückgegriffen werden.

In jedem Fall erfordert die Durchführung der Bildkompression bei entsprechender Approximationsgüte im allgemeinen wesentlich höhere Rechenzeiten als die Durchführung der Dekompression, sodaß das beschriebene Verfahren zur Anwendung in solchen Fällen besonders geeignet erscheint, in denen die zur Kompression der Bilddaten verwendete Zeit nicht besonders kritisch ist, solange die Dekompression der Bilddaten genügend schnell, z.B. in Echtzeit möglich ist. Damit ist das Verfahren zur Anwendung bei der Kompression und Dekompression medizinischer Bilddaten oder anderer Bildarchive besonders geeignet.

Das Verfahren kann auch mit Hilfe eines Computerpropramms ausgeführt werden, welches dieser Patentanmeldung als Anlage beigefügt ist.

Nachstehend ist ein Computerprogramm zur Durchführung des erfindungsgemäßen Verfahrens abgedruckt.

```lisp
;;;================================================================
;;;      <<<<<<<<<<<< Image coding via evolving IFS codes >>>>>>>>>>>>>>
;;;
;;;   A. Luhn, Siemens AG, ZFE IS INF1
;;;   Version: 1991-3-15
;;;================================================================



;;; ---------- global variables and data structures ------------

(defvar *image-width* 127)                    ;size of image -1
(defvar *image-height* 127)
(defvar *image* (make-array (list (1+ *image-width*) (1+ *image-height*))
                            :element-type '(mod 256)
                            :initial-element 0)) ;an array of bytes for the image


(defvar *IFS-pop* '())                         ;the population (a list) of IFS structures
(defvar *offsprings* '())                      ;dito, used for offspring
(defvar *IFS-pop-size* 25)                     ;length of above lists

(defvar *iterations* 1000)        ;number of iterations to use for testing an IFS
(defvar *generation-count* 0)
```

```
(defvar *mutate-prop* 1.0)                    ;chance of a mutation per generation
(defvar *crossover-prop* 0.0)                 ;dito for gene crossover
(defvar *exchange-prop* 0.0)                  ;dito for gene exchange


(defvar *measure-width* 127)                  ; currently, identical to image
(defvar *measure-height* 127)
(defvar *measure* (make-array (list (1+ *measure-width*) (1+ *measure-height*))
                         :element-type 'integer
                         :initial-element 0))
(defvar *optimal-fitness*)                    ;depends on the value of *iterations*



(defstruct IFS
  p-list                                      ;the "genes"
  (fitness -99999)                            ;fitness value
  x y                                         ;current point
  a b c d e f                                 ;the affine trafo pars (arrays)
  det                                         ;determinants of trafo (array)
  cprop)                                      ;cumulative propabilities (array)



(defun IFS-map-point (IFS)
  ;;------------------------------------------------
  ;; updates x and y slots of IFS,
  ;; returns new values as a cons
```

EP 0 577 631 B1

```lisp
  ;;------------------------------------------
  (declare (optimize (speed 3) (safety 0)))
  (let* ((r (random 1.0))
         (j (do ((i 0 (1+ i)))
                ((< r (nth i (IFS-cprop IFS))) i)))  ;selected mapping
         (xx (IFS-x IFS))
         (yy (IFS-y IFS)))
    (cons (setf (IFS-x IFS) (floor (+ (* (aref (IFS-a IFS) j) xx)
                                      (* (aref (IFS-b IFS) j) yy)
                                      (aref (IFS-e IFS) j))))
          (setf (IFS-y IFS) (floor (+ (* (aref (IFS-c IFS) j) xx)
                                      (* (aref (IFS-d IFS) j) yy)
                                      (aref (IFS-f IFS) j)))))))


(defun convert-IFS-pars (a b c d e f xmin xmax ymin ymax w h)
  ;;------------------------------------------------------------
  ;; converts IFS parameters (a b c d e f) as defined
  ;; for a rectangle with edges min, ... for use in an integer
  ;; image matrix of width w and height h
  ;; returns the converted parameters as a list
  ;;------------------------------------------------------------
  (list a
        (- (* b (/ w h) (/ (- ymax ymin) (- xmax xmin))))
        (- (* c (/ h w) (/ (- xmax xmin) (- ymax ymin))))
        d
        (* (/ w (- xmax xmin))
```
EP 0 577 631 B1

```lisp
                    (+ (* (- a 1) xmin) (* b ymax) e))
            (- (* (/ h (- ymax ymin))
                    (+ (* c xmin) (* (- d 1) ymax) f)))))

(defun setup-IFS (the-IFS &key (kind 'rot)
                             (initial-x (random 1.0))
                             (initial-y (random 1.0)))
;;-------------------------------------------------------
;; fill the transformation parameters with values from p-list
;; formats of p-list: list of lists, each sublist specifies 1 trafo
;; standard: (a b c d e f); these are the genes
;; rot: (s alpha beta phi e f), si determines contraction in i direction
;; s: scaling factor
;; alpha: stretch/compression in y-direction
;; beta: shearing
;; phi: rotation angle
;; e,f: translation
;; collage theorem requires a contracting map: s*s*alpha < 1
;; returns the IFS
;;-------------------------------------------------------
(let ((i 0)
      (c-props '(0))
      c-props-norm
      phi
      (num-of-trafos (length (IFS-p-list the-IFS))))
  (setf (IFS-x the-IFS) initial-x
        (IFS-y the-IFS) initial-y
```

```
(IFS-a the-IFS) (make-array num-of-trafos)
(IFS-b the-IFS) (make-array num-of-trafos)
(IFS-c the-IFS) (make-array num-of-trafos)
(IFS-d the-IFS) (make-array num-of-trafos)
(IFS-e the-IFS) (make-array num-of-trafos)
(IFS-f the-IFS) (make-array num-of-trafos)
(IFS-det the-IFS) (make-array num-of-trafos)
(IFS-cprop the-IFS) (make-array num-of-trafos))
;;-- fill the slots of the structure with the values
;;    derived from p-list
(dolist (pp (IFS-p-list the-IFS))
  (case kind
    (standard
      (setf (aref (IFS-a the-IFS) i) (first pp))
      (setf (aref (IFS-b the-IFS) i) (second pp))
      (setf (aref (IFS-c the-IFS) i) (third pp))
      (setf (aref (IFS-d the-IFS) i) (fourth pp))
      (setf (aref (IFS-e the-IFS) i) (fifth pp))
      (setf (aref (IFS-f the-IFS) i) (sixth pp)))
    (otherwise
      (setf phi (- (* (fourth pp) 0.0174532))) ;;deg->rad
      (setf (aref (IFS-a the-IFS) i)
            (* (first pp) (cos phi)))
      (setf (aref (IFS-b the-IFS) i)
            (* (first pp) (second pp)
               (+ (* (third pp) (cos phi)) (sin phi))))
      (setf (aref (IFS-c the-IFS) i)
```

EP 0 577 631 B1

EP 0 577 631 B1

```lisp
                 (* (first pp) (- (sin phi)))))
        (setf (aref (IFS-d the-IFS) i)
              (* (first pp) (second pp)
                 (- (cos phi) (* (third pp) (sin phi)))))))
        (setf (aref (IFS-e the-IFS) i) (fifth pp))
        (setf (aref (IFS-f the-IFS) i; (sixth pp))))
  ;;-- calc determinants for the IFS propabilities and
  ;;   the cumulative propability distribution
  (setf (aref (IFS-det the-IFS) i)
        (max 0.01
             (abs (- (* (aref (IFS-a the-IFS) i) (aref (IFS-d the-IFS) i))
                     (* (aref (IFS-b the-IFS) i) (aref (IFS-c the-IFS) i)))))))
  (push (+ (car c-props) (aref (IFS-det the-IFS) i))
        c-props)
  (incf i))
  (setf c-props-norm (car c-props))
  (setf (IFS-cprop the-IFS)
        (mapcar #'(lambda (x) (/ x c-props-norm))
                (cdr (reverse c-props))))
  (dotimes (i 20)                          ;initial iterations for x and y thrown
away
     (IFS-map-point the-IFS))             ; (better: calc a fixed point of one
trafo)
  the-IFS))


(defun mutate-IFS (the-IFS)
  ;; --------------------------------------------------------------
```

```
;;   selects a parameter and replaces it
;; by a mutated value, paying attention to
;; the constraint s*s*alpha<1
;; mutation by random walk of genes
;; WORKS ONLY FOR IFS DEFINED WITH kind=rot
;;-------------------------------------------------
(when (< (random 1.0) *mutate-prop*)
  (let* ((gene (nth (random (length (IFS-p-list the-IFS)))
                    (IFS-p-list the-IFS)))
         (par (random 6)))
    (case par
      (0                                     ;scale factor
        (setf (first gene) (max 0 (+ (first gene)
                                     (+ -0.1 (random 0.2))))))
        (setf (second gene) (min (second gene)
                                 (/ (* (first gene) (first gene)))))))
      (1                                     ;y-stretching
        (setf (second gene) (max 0 (+ (second gene)
                                      (+ -0.1 (random 0.2)))))
        (setf (first gene) (min (first gene)
                               (expt (second gene) -0.5))))
      (2                                     ;shearing
        (setf (third gene) (+ -0.5 (random 1.0))))
      (3                                     ;rotation
        (setf (fourth gene) (mod (+ (fourth gene)
                                    (+ -15 (random 31))) 360)))
      (4                                     ;x-translation
```

```
          (incf (fifth gene) (+ -2 (random 5))))
      (5                                    ;y-translation
          (incf (fifth gene) (+ -2 (random 5))))))))
  the-IFS)                                 ;return the mutated copy


(defun crossover-IFS (father mother child)
  ;;----------------------------------------------
  ;; performs the equivalent of a genetic crossover
  ;; between the p-lists of the two IFS instances.
  ;; child can be also father or mother itself
  ;; first part of p-list is taken from father
  ;; (a total of f-splice elements), the second
  ;; from the mother (starting with (nth m-splice m-genes)
  ;;----------------------------------------------
    (let ((c-genes (copy-tree (IFS-p-list father)))) ;default genes
      (when (< (random 1.0) *crossover-prop*)
        (let* ((m-genes (copy-tree (IFS-p-list mother)))
               (f-splice (random (length c-genes )))
               (m-splice (random (length m-genes)))
               (place c-genes))
          (setq place (nthcdr f-splice place))
          (setq m-genes (nthcdr m-splice m-genes))
          (if (> f-splice 0)
             (rplacd place m-genes)          ;splice genes together
             (setq c-genes m-genes))))       ;drop father's genes altogether
      (setf (IFS-p-list child) c-genes)
      child))                                ;return the possibly modified child
```

EP 0 577 631 B1

```lisp
(defun exchange-IFS (father mother child)
  ;;-----------------------------------------------
  ;; performs the equivalent of a gene exchange
  ;; between the p-lists of the two IFS instances.
  ;; child can be also father or mother itself
  ;;-----------------------------------------------
  (when (< (random 1.0) *exchange-prop*)
    ;; -- this function is currently only a stub
    nil)
  child)

(defun new-IFS (father mother)
  (let ((child (make-IFS)))
    (crossover-IFS father mother child)    ;give child a set of genes
    (exchange-IFS father mother child)     ;exchange genes
    (mutate-IFS child)                     ;mutate the genes
    (setup-IFS child)))                    ;"ontogenesis", return new child

(defun iterate-IFS (the-IFS n)
  (declare (inline IFS-map-point)
           (optimize (speed 3) (safety 0)))
  (dotimes (i n)
    (IFS-map-point the-IFS)))

(defun select-IFS ()
  ;;-----------------------------------------------
```

EP 0 577 631 B1

```
;; selects an IFS from the population according to its fitness
;; individuals are drawn preferably from the fitter part of the
;; population (the end of the list *IFS-pop*)
;;----------------------------------------------------
(nth (floor (* *IFS-pop-size*
               (expt (random 1.0) 0.25)))
     *IFS-pop*))

(defun test-IFS (the-IFS)
  ;;----------------------------------------
  ;; example for a comparison of an IFS image with the given image
  ;; in array *image* (uses a copy of *image* in *measure*)
  ;; iterates IFS, increment fitness for each point of the image
  ;; that is hit by the pixel value, then subtract 1 from the pixel value
  ;; this favors the concentration of mapped points in dark
  ;; areas of the image, but at the same time spreads the points to
  ;; areas that are not yet covered enough
  ;;----------------------------------------
  (let ((count 0)
        point)
    (dotimes (i *iterations*)
      (setq point (IFS-map-point the-IFS))
      (incf count (aref *measure*                    ;add reduced pixel value at point
                        (max 0 (min *measure-width* (car point)))
                        (max 0 (min *measure-height* (cdr point)))))
      (decf (aref *measure*                  ;decrement pixel value
                  (max 0 (min *measure-width* (car point)))
```

EP 0 577 631 B1

```lisp
                          (max 0 (min *measure-height* (cdr point)))))))
    ;;----- reset *measure*
    (setup-image)                              ;restore the image
    (setf (IFS-fitness the-IFS) count)))

(defun setup-image ()
  ;;-----------------------------------
  ;; copies the gray-level image that is to be coded
  ;; into the array *measure* used in function test-image
  ;;-----------------------------------
  (dotimes (i (1+ *image-width*))
    (dotimes (j (1+ *image-height*))
        (setf (aref *measure* i j)
              (aref *image* i j)))))

(defun init-image ()
  ;;-----------------------------------------------------
  ;; acquires an image, transfers it into array *image*
  ;; calculates the optimal value of the IFS-fitness
  ;; value that can be reached with *iterations* of
  ;; an optimal IFS mapping, puts it into *optimal-fitness*
  ;; (this depends on the algorithm used for the comparison
  ;; of the image with an IFS-coding (i.e. on the function test-image)
  ;; IMPLEMENTATION OMITTED
  ;;-----------------------------------------------------
  nil)
```

EP 0 577 631 B1

```
(defun evolve-IFS-popl (highest-fitness &key new)
   ;;-------------------------------------------------------
   ;; boundary condition: constant population of *IFS-pop-size* individuals
   ;; asynchronous evolution: each offspring immediately becomes a member
   ;; of the population
   ;;-------------------------------------------------------
   (let (current-IFS
         (min-fitness 99999)
          max-fitness)
     (when new                            ;setup a new population
       (setup-image)
       (setq *generation-count* 0         ;this is actually the number of produced
offspring
             *IFS-pop* '())
       (dotimes (i *IFS-pop-size*)
         (setq current-IFS (setup-IFS
                              (make-IFS :p-list
                              '(( 0.5  1  0  0  0   0)
                                ( 0.5  1  0  0  0  64)
                                ( 0.5  1  0  0 64   0)
                                ( 0.5  1  0  0 64  64))))))
         (test-IFS current-IFS)
         (push current-IFS *IFS-pop*)))
     (loop
       (incf *generation-count*)
       ;; -- create a new IFS
```

```
(setq current-IFS (new-IFS (select-IFS)
                           (select-IFS)))
(test-IFS current-IFS)
(setq min-fitness (min min-fitness (IFS-fitness current-IFS)))
(when (>= (IFS-fitness current-IFS) ;current IFS is fitter than weakest
          (IFS-fitness (first *IFS-pop*)))
  (pop *IFS-pop*)                        ;remove the weakest
  (push current-IFS *IFS-pop*)        ;insert the new
  (setq *IFS-pop* (sort *IFS-pop* #'< :key #'IFS-fitness)))
(setq max-fitness (IFS-fitness (car (last *IFS-pop*))))
(when (>= max-fitness highest-fitness)
  (return))
(when (= (mod *generation-count* *IFS-pop-size*) 0)
  (format t "~%~A ~A ~A ~,2F ~A"
          *generation-count*
          min-fitness
          (IFS-fitness (first *IFS-pop*))
          (/ (reduce #'(lambda (x ifs) ;average of population
                         (+ x (IFS-fitness ifs)))
                     *IFS-pop* :initial-value 0) *IFS-pop-size*)
          max-fitness)
  (setq min-fitness 999999)))))

(defun evolve-IFS-pop2 (highest-fitness &key new)
  ;;-------------------------------------------------------
  ;; boundary condition: constant population of *IFS-pop-size* individuals.
  ;; Synchronous evolution: produce *IFS-pop-size* offspring from
```

```
;; population, test each, keep *IFS-pop-size* best individuals (parents or
;; new offspring) in the poulation
;;-----------------------------------------------------
(let (current-IFS
      (min-fitness 99999)
      max-fitness)
  (when new                              ;setup a new population
    (setup-image)
    (setq *generation-count* 0
          *IFS-pop* '())
    (dotimes (i *IFS-pop-size*)
      (setq current-IFS (setup-IFS
                          (make-IFS :p-list
                            '(( 0.5   1   0   0   0   0)
                              ( 0.5   1   0   0   0  64)
                              ( 0.5   1   0   0  64   0)
                              ( 0.5   1   0   0  64  64)))))
      (test-IFS current-IFS)
      (push current-IFS *IFS-pop*)))
  (setq *IFS-pop* (sort *IFS-pop* #'< :key #'IFS-fitness))
  (loop
    (incf *generation-count*)
    (setq *offsprings* '())
    (dotimes (i *IFS-pop-size*)            ;create an offspring population
      (setq min-fitness 999999)
      ;; --- create a new IFS
      (setq current-IFS (new-IFS (select-IFS)
```

```
                          (select-IFS)))
        (test-IFS current-IFS)
        (setq min-fitness (min min-fitness (IFS-fitness current-IFS)))
        (push current-IFS *offsprings*))
      (setq *offsprings* (sort *offsprings* #'< :key #'IFS-fitness))
      ;; --- retain the best of both parents or childs
      (setq *IFS-pop* (nthcdr 25 (merge 'list *offsprings* *IFS-pop*
                                        #'< :key #'IFS-fitness)))
      (setq max-fitness (IFS-fitness (car (last *IFS-pop*))))
      (format t "~%~A ~A ~A ~,2F ~A"
              *generation-count*
              min-fitness                     ;min fitness of offspring
              (IFS-fitness (first *IFS-pop*)) ; mit fitness of population
              (/ (reduce #'(lambda (x ifs) ;average fitness of population
                             (+ x (IFS-fitness ifs)))
                         *IFS-pop* :initial-value 0) *IFS-pop-size*)
              max-fitness)
      (when (>= max-fitness highest-fitness)
        (return)))))


(defun encode-image (&optional (fidelity 0.9))
  ;;---------------------------------------------------------------
  ;; evolves an IFS population until a desired coding
  ;; quality for the image in array *image*
  ;; is reached (fidelity=1 means perfect match)
  ;;---------------------------------------------------------------
```

EP 0 577 631 B1

```
(init-image)                              ;setup *image*, *optimal-fitness*
(setq *iterations* 1000)                  ;determines speed and quality of coding
(format t "~%Start IFS evolution with a fitness goal of ~A"
        (* fidelity *optimal-fitness*))
(format t "~%generation  worst  min  avg  max   fitness")
(format t "~%----------------------------------------------------")
(evolve-IFS-pop2 (* fidelity *optimal-fitness*)
                 :new T))
```

EP 0 577 631 B1

**Patentansprüche**

1. Verfahren zur Kompression von Bilddaten, bei dem

   - Bilder durch invariante Dichten stochastischer Prozesse approximiert werden;
   - diese stochastischen Prozesse einer Familie von stochastischen Prozessen angehören, deren Elemente durch Angabe der Werte bestimmter Parameter identifiziert werden können;
   - die zur Kompression eines Bildes verwendeten stochastischen Prozesse mit Hilfe eines Optimierungsverfahrens gefunden werden, welches eine Gütefunktion zur Bewertung der Güte cer Approximation dieses Bildes durch die invarianten Dichten von stochastischen Prozessen optimiert;
   - die werte der Parameter der zur Kompression eines Bildes verwerteten stochastischen Prozesse eine komprimierte Darstellung dieses Bildes ergeben.

2. Verfahren nach Anspruch 1, bei dem digitale Rasterbilder komprimiert werden.

3. Verfahren nach einem aer vorhergehenden Ansprüche, bei dem digitale Rasterbilder einer zeitlichen Folge komprimiert werden.

4. Verfahren nach einem der vorhergehenden Ansprüche, bei dem

   - die familie der stochastischen Prozesse durch eine Zahl n charakterisiert ist, welche die Anzahl von affinen Transformationen w(i), i = 1, ..., n der Bildebene angibt, aus denen jedes Element der Familie sich durch Hintereinanderausführung der affinen Transformationen w(i) mit relativen Häufigkeiten p(i) ergibt, und
   - jeder stochastische Prozeß dieser Familie durch die Werte seiner Parameter, nämlich der Transformationsparameter der n affinen Transformationen w(i) sowie der relativen Häufigkeiten p(i), identifiziert werden kann.

5. Verfahren nach einem der vorhergehenden Ansprüche, bei dem die Güte aer Approximation eines Bildes durch eine invariante Dichte mit Hilfe einer Gütefunktion bewertet wird, welche durch eine Metrik auf dem Raum der Dichten gegeben ist.

6. Verfahren nach einem der vorhergehenden Ansprüche, bei dem ein stochastisches Optimierungsverfahren verwendet wird.

7. Verfahren nach einem der vorhergehenden Ansprüche, bei dem ein genetischer Algorithmus als stochastisches Optimierungsverfahren verwendet wird.

8. Verfahren nacn Anspruch 6, bei dem genetische Veränderungen durch Mutation, Crossover, Gentausch oder eine Kombination dieser Mechanismen bewirkt werden.

9. Verfahren nach einem der vorhergehenden Ansprüche, bei dem das Optimierungsverfahren von einem stochastischen Prozeß oder von mehreren stochastischen Prozessen ausgeht, deren invariante Dichten innerhalb der bildebene konstant sind.

10. Verfahren nach einem cer vorhergehenden Ansprüche, bei dem das zu komprimierende Bild in verschiedenen Auflösungsebenen z.B. einer Auflösungspyramide vorliegt, und bei dem die Auflösung mit dem Fortschreiten des Optimierungsverfahrens schrittweise gesteigert wird.

**Claims**

1. Process for compressing image data, in which process

   - images are approximated by invariant densities of stochastic processes;
   - these stochastic processes belong to a family of stochastic processes whose elements can be identified by indication of the values of specified parameters;
   - the stochastic processes employed for the compression of an image are found with the aid of an optimization process which optimizes a quality function for an assessment of the quality of the approximation of this image by the invariant densities of stochastic processes;

- the values of the parameters of the stochastic processes employed for the compression of an image give a compressed representation of this image.

2. Process according to Claim 1, in which digital raster images are compressed.

3. Process according to one of the preceding claims, in which digital raster images of a temporal sequence are compressed.

4. Process according to one of the preceding claims, in which

   - the family of the stochastic processes is characterized by a number n, which indicates the number of affine transformations w(i), i = 1, ..., n of the image plane, from which transformations each element of the family emerges by sequential execution of the affine transformations w(i) with relative frequencies p(i), and
   - each stochastic process of this family can be identified by the values of its parameters, namely the transformation parameters of the n affine transformations w(i) as well as the relative frequencies p(i).

5. Process according to one of the preceding claims, in which the quality of the approximation of an image by an invariant density is assessed by means of a quality function which is given by a metric on the density space.

6. Process according to one of the preceding claims, in which a stochastic optimization process is employed.

7. Process according to one of the preceding claims, in which a genetic algorithm is employed as stochastic optimization process.

8. Process according to Claim 6, in which genetic changes are effected by mutation, crossover, gene exchange or a combination of these mechanisms.

9. Process according to one of the preceding claims, in which the optimization process proceeds from a stochastic process or from a plurality of stochastic processes, whose invariant densities are constant within the image plane.

10. Process according to one of the preceding claims, in which the image to be compressed is present in various planes of resolution, e.g. a pyramid of resolution, and in which the resolution is increased stepwise with the progression of the optimization process.

**Revendications**

1. Procédé de compression de données d'images, dans lequel

   - on se rapproche d'images par approximation par des densités invariantes de processus stochastiques ;
   - ces processus stochastiques appartiennent à une famille de processus stochastiques, dont on peut identifier les éléments par indication des valeurs de paramètres déterminés ;
   - on trouve les processus stochastiques utilisés pour la compression d'une image, à l'aide d'un procédé d'optimisation, qui optimise une fonction de qualité destinée à évaluer la qualité de l'approximation de cette image par les densités invariantes de processus stochastiques ;
   - les valeurs des paramètres des processus stochastiques utilisés pour la compression d'une image donnent une représentation comprimée de cette image.

2. Procédé suivant la revendication 1, dans lequel on comprime des images numériques de trames.

3. Procédé suivant l'une des revendications précédentes, dans lequel on comprime des images de trames d'une succession temporelle.

4. Procédé suivant l'une des revendications précédentes dans lequel

   - la famille des processus stochastiques est caractérisée par un nombre n, qui indique le nombre de transformations affines w (i), i = 1, ..., n du plan de l'image, desquelles résulte chaque élément de la famille par application, l'une après l'autre, des transformations affines w(i) à des fréquences relatives d'apparition p(i), et

- on peut identifier chaque processus stochastique de cette famille par les valeurs de ses paramètres, à savoir des paramètres des n transformations affines w(i) ainsi que des fréquences relatives d'apparition p(i).

5. Procédé suivant l'une des revendications précédentes, dans lequel on évalue la qualité de l'approximation d'une image par une densité invariante à l'aide d'une fonction de qualité, qui est donnée par une métrique sur l'espace des densités.

6. Procédé suivant l'une des revendications précédentes, dans lequel on utilise un procédé stochastique d'optimisation.

7. Procédé suivant l'une des revendications précédentes, dans lequel on utilise un algorithme génétique comme procédé stochastique d'optimisation.

8. Procédé suivant la revendication 6, dans lequel on provoque des modifications génétiques par mutation, crossover, échange de gènes ou par une combinaison de ces mécanismes.

9. Procédé suivant l'une des revendications précédentes, dans lequel le procédé d'optimisation part d'un processus stochastique ou de plusieurs processus stochastiques, dont les densités invariantes sont constantes dans le plan de l'image.

10. Procédé suivant l'une des revendications précédentes, dans lequel l'image à comprimer est présente dans des plans différents de résolution par exemple d'une pyramide de résolution, et dans lequel on augmente pas-à-pas la résolution en poursuivant le procédé d'optimisation.